# EUROPÄISCHE PATENTSCHRIFT

(11) **EP 3 784 708 B1**
(45) Veröffentlichungstag und Bekanntmachung des Hinweises auf die Patenterteilung: **23.03.2022**
(21) Anmeldenummer: 19718392.4
(22) Anmeldetag: 23.04.2019
(51) Int. Cl.: C08G 18/48, C08G 18/66, C08G 18/76, C08G 18/18, C08G 18/32, F25D 11/00, C08G 18/79, C08G 18/16, C08G 18/09, C08G 101/00, C08J 9/00, C08J 9/02, C08G 18/22, C08L 75/04

(54) **OFFENZELLIGER POLYURETHANHARTSCHAUM UND DESSEN VERWENDUNG**
OPEN-CELL RIGID POLYURETHANE FOAM AND ITS USE
MOUSSE DURE EN POLYURETHANE À ALVÉOLES OUVERTES ET SON UTILISATION

(30) Priorität: 25.04.2018 EP 18169149
(43) Veröffentlichungstag der Anmeldung: 03.03.2021
(73) Patentinhaber: Covestro Intellectual Property GmbH & Co. KG, 51373 Leverkusen (DE)
(72) Erfinder: SCHORNSTEIN, Marcel, 41462 Neuss (DE); NORDMANN, Peter, 41539 Dormagen (DE); REITHMEIER, Marina, 51069 Köln (DE)
(74) Vertreter: Levpat
(86) Internationale Anmeldenummer: PCT/EP2019/060295
(87) Internationale Veröffentlichungsnummer: WO 2019/206865

(56) Entgegenhaltungen:
- EP-A1- 0 381 324
- US-A- 5 889 067

## Beschreibung

Die vorliegende Erfindung betrifft offenzellige Polyurethanschäume und deren Verwendung in Vakuumisolationspaneelen. Die Schaumstoffe können neben Urethangruppen (PUR) auch Isocyanuratgruppen (PIR) enthalten. In dieser Anmeldung sind mit der Bezeichnung PUR/PIR-Hartschaum bzw. PUR/PIR-Hartschaumstoff sowohl Hartschäume, welche im Wesentlichen Urethangruppen aufweisen, als auch Hartschäume enthaltend sowohl Urethan- als auch Isocyanuratgruppen gemeint, falls nicht anders angegeben.

PUR/PIR-Hartschäume sind seit langem bekannt. Ein wesentliches Einsatzgebiet ist die Temperaturisolierung. Dabei gewinnt die Anwendung von Vakuumisolationspaneelen (VIP) enthaltend PUR/PIR-Hartschäume zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Die Herstellung von offenzelligen PUR/PIR-Hartschäumen ist prinzipiell bekannt. Im Allgemeinen werden der Reaktionsmischung bestimmte, zellöffnende Substanzen zugegeben, um eine Öffnung der Zellen beim Schäumprozess zu bewirken.

So beschreibt US-A 5 350 777 die Verwendung von Erdalkalisalzen langkettiger Fettsäuren als Zellöffner.

EP-A 498 628 A offenbart die Herstellung offenzelliger Hartschäume durch die Wirkung eines thermisch aktivierbaren Treibmittels. Dieses Verfahren weist den Nachteil auf, dass die Schaumzellen lediglich dort geöffnet werden, wo eine Mindesttemperatur im Verlauf des Schaumprozesses überschritten wird, so dass die erhaltenen Schäume über das mit dem Schaum ausgefüllte Volumen hinweg keine gleichmäßig hohe Offenzelligkeit aufweisen.

In DE-A 43 03 809 wird ein Verfahren zur Herstellung von Hartschaumstoffen mit erhöhter Offenzelligkeit beschrieben, bei dem die zellöffnende Wirkung eines flüssigen Polyolefinzusatzes genutzt wird. Dieses Verfahren besitzt den Nachteil einer engen Anwendungsbreite und weiterhin, dass bei einer nicht exakten Dosierung des Polyolefinzusatzes schnell Zellvergröberung eintritt.

In US-A 5 250 579 und US-A 5 312 846 wird die zellöffnende Wirkung von Substanzen mit einer Oberflächenspannung von weniger als 23 mJ/m ² offenbart. Diese Substanzen weisen jedoch den Nachteil auf, dass sie organisch gebundenes Halogen enthalten.

In US-A 5 889 067 wird ein Verfahren zur Herstellung eines offenzelligen Polyurethanhartschaums beschrieben, welches die Herstellung des Polyurethan-Hartschaumes aus Polyol mit einem flüchtigen Treibmittel ausgewählt aus der Gruppe bestehend aus Kohlenwasserstoffen, Hydrofluoralkanen, Perfluoralkanen, Mischungen dieser Treibmittel untereinander oder mit Wasser, umfasst, unter Zugabe eines einwertigen Fettalkohols welcher eine gute Löslichkeit in den Kohlenwasserstoffen besitzt und als Zellöffnungsmittel dient, sowie eines Schaumstabilisators, der eine sehr kleine Zelle in Gegenwart eines Isocyanat-Trimer-Katalysators und eines organischen Isocyanats bildet. Der sich daraus ergebende offenzellige Polyurethanhartschaum hat eine Zellgröße von weniger als etwa 95 µm und ist z.B. für die die Verwendung als Kernmaterial in einem Vakuumisolationspaneel geeignet.

EP 905 159 A sowie EP 905 158 A offenbaren Verfahren zur Herstellung von offenzelligen Polyurethan-Hartschaumstoffen, bei denen als Treibmittel bevorzugt Wasser in Kombination mit Kohlenwasserstoffen oder Fluorkohlenwasserstoffen eingesetzt wird. Die Polyolformulierungen sollen 0,1 - 80 Gew.-% an Polyesteralkoholen enthalten, bei denen es sich bevorzugt um Umsetzungsprodukte der Ricinolsäure und/oder des Rizinusöls und/oder der Tallölfettsäure mit mehrfunktionellen Alkoholen handelt. Diese Komponenten sollen als Emulgierhilfsmittel für nicht halogenhaltige Treibmittel wirken. Mit den beanspruchten Polyolen werden in den Beispielen sowohl offenzellige als auch geschlossenzellige Schäume hergestellt, wobei die Offenzelligkeit an die Anwesenheit von als Zellöffnern bekannten Additiven geknüpft ist. Die Zellen der erhaltenen Schaumstoffe werden zwar als feinzellig beschrieben, jedoch bedeutet "sehr feinzellig" gemäß Legende einen Zellgrößenbereich von 180 - 250 µm. Über die Homogenität der Zellgrößenverteilung wird zudem keine Aussage gemacht.

EP 2 072 548 A beschreibt ein Verfahren zur Herstellung von offenzelligen PUR/PIR-Hartschaumstoffen mit einem Isocyanatindex im Bereich zwischen 150-400, durch Umsetzung von Polyisocyanaten mit Polyolen mit einer Funktionalität im Bereich von 2,5 bis 5,5 und eine Hydroxylzahl im Bereich von 200-400 mg KOH/g, in Gegenwart einer Treibmittelmischung aus Wasser und mindestens einem physikalischen Treibmittel ist. Die Offenzelligkeit der Schäume in den Beispielen wird jedoch vor allem mit hohen Anteilen an zellöffnenden Substanzen erhalten.

Bei der Herstellung von PUR/PIR-Hartschäumen wird eine Polyolkomponente, in welcher auch ein Treibmittel enthalten ist, mit einem Isocyanat zur Reaktion gebracht. Durch die Reaktion von Isocyanat mit Wasser entsteht Kohlcnstoffdioxid, das auch als Treibmittel wirkt. Es ist auch bekannt, CO₂ als Treibmittel der Polyolkomponente oder der Reaktionsmischung zuzusetzen.

Auch für die Verwendung von überkritischem CO₂ in Kombination mit bestimmten Verfahrensschritten und Komponenten wurde ein Einfluss auf Feinzelligkeit und Offenzelligkeit gefunden.

Die schlagartige Entspannung CO₂-haltiger Reaktionsmischungen wird in WO 2001/98389 A1 beschrieben. Diese Patentanmeldung betrifft ein Verfahren zur Herstellung von Polyurethan-Blockschaum, wobei eine Kohlenstoffdioxid enthaltende Polyurethan-Reaktivmischung plötzlich von einem Druck oberhalb des Gleichgewichtlösungsdruckes des Kohlenstoffdioxids auf Normaldruck entspannt wird. Die flüssige Polyurethan-Reaktivmischung wird unter Freisetzung von gelöstem Kohlenstoffdioxid aufgeschäumt, die aufgeschäumte Mischung wird auf ein Substrat aufgebracht und anschließend zum Blockschaum ausgehärtet. Das Kohlenstoffdioxid wird zunächst bei einem wesentlich oberhalb des Gleichgewichtlösungsdruckes liegenden Druck in der Reaktivmischung oder mindestens einer der Komponenten Polyol und Isocyanat vollständig gelöst. Anschließend wird der Druck auf einen Druck nahe des Gleichgewichtlösungsdruckes herabgesetzt, wobei zwischenzeitlich der Gleichgewichtlösungsdruck unter Freisetzung geringer Mengen des Kohlenstoffdioxid unter Bildung einer Blasen-Mikrodispersion unterschritten wird, gegebenenfalls die Komponenten gemischt werden und die plötzliche Druckherabsetzung auf Normaldruck erfolgt, bevor das freigesetzte Kohlenstoffdioxid wieder vollständig aufgelöst wird. Allerdings finden sich hier keine Hinweise auf nanozelluläre Schäume oder überkritische Bedingungen für das Treibmittel.

WO 2011/054868 A und WO 2011/054873 A offenbaren Herstellungsverfahren für feinzellige, Urethangruppen-haltige Schaumstoffe unter Verwendung von CO₂ als überkritischem Treibmittel. Entscheidend für den Erfolg des Verfahrens ist in beiden Fällen die Herstellung einer Mikroemulsion aus Polyolphase und überkritischem CO₂. Diese soll durch die Verwendung geeigneter Tensidkomponenten eingestellt werden. Es werden jedoch keine Angaben gemacht, wie mit diesem Verfahren Schäume mit überwiegend offenen Zellen hergestellt werden.

WO 2015/109488 A beschreibt ebenfalls ein Herstellungsverfahren von Urethangruppen-haltigen Schaumstoffen unter Verwendung von CO₂ als überkritischem Treibmittel. Bei dem Herstellverfahren handelt es sich um ein mehrstufiges Verfahren, wobei die Polyolkomponente zunächst mit CO₂ unter überkritischen Bedingungen gesättigt werden muss und anschließend auf die Reaktionsmischung mindestens Drücke von 100 bar einwirken müssen. Die hergestellten Schäume sollen kleine Zellgrößen und eine hohe Porosität aufweisen. Schäume mit einer hohen Offenzelligkeit werden jedoch nur bei Einsatz von Propylenoxid-basierten Polyethern und bei Verwendung von zwei ganz bestimmten zellöffnenden Tensiden in einem bestimmten Verhältnis gefunden. Das Verfahren liefert Schäume mit Dichten >> 100 kg/m³. Die gesamte Dauer für das mehrstufige Verfahren (Sättigen, Reagieren, Aushärten) im Reaktor beträgt >> 1 h, während der überkritische Bedingungen eingehalten werden müssen.

Patent US 5234960 beschreibt ein Verfahren zur Herstellung von polymeren Schäumen, bei dem spezielle isocyanatreaktive Zusammensetzungen, die Verbindungen mit Imino- oder Enamino Gruppen in Mengen von >25% enthalten, sowie als Katalysator Phospholenoxide für die Carbodiimid Herstellung eingesetzt werden. Mit dem in diesem Dokument beschriebenen Verfahren werden Schaumstoffe mit einer Dichte von 390 kg/m³ erhalten. Die Aufgabe bestand darin, die Bildung von Carbodiimid Verknüpfungen zu unterstützen.

Ausgehend von dem vorliegenden Stand der Technik bestand die Aufgabe darin, einen sehr feinzelligen, offenzelligen, Urethangruppen enthaltenden Hartschaum (PUR/PIR-Hartschaum) zur Verfügung zu stellen, der sich zudem in einem einfachen Verfahren herstellen lässt. Eine möglichst hohe Offenzelligkeit kombiniert mit einer kleinen Zellgröße ist gewünscht, insbesondere für bestimmte Anwendungen, bei denen diese Schaumeigenschaft die Möglichkeit eröffnet, durch Anlegen von Unterdruck die Wärmeleitfähigkeit des Schaumes zu reduzieren.

Gegenstand der Erfindung sind offenzellige Polyurethanschäume mit einer Offenzelligkeit > 90% (ISO 4590:2002; Deutsche Fassung EN ISO 4590:2003), einer durchschnittlichen arithmetischen Zellgröße zwischen 20-90 µm, bevorzugt 30-80 µm, besonders bevorzugt 40-70 µm, wobei die durchschnittliche arithmetische Zellgröße durch lichtmikroskopische Auswertung via Lichtmikroskop VHX 5000 bestimmt wird und der zu vermessende Probekörper an 3 unterschiedlichen Stellen jeweils über einen kreisförmigen Bereich mit einem Durchmesser von 5 mm untersucht wird, die Auflösung so gewählt wird, dass der ausgewählte Bereich rund 100 Zellen erfasst, und 100 Zellen vermessen werden, der kleinste und der "D90" Zelldurchmesser ("D90": bei dem 90% der Zellen kleiner sind als dieser Wert) sowie der durchschnittliche arithmetische Zelldurchmesser berechnet werden, bei einer Rohdichte zwischen 35 -120 kg/m³, bevorzugt 40-100 kg/m³, besonders bevorzugt 40 -70 kg/m³ (ISO 845:2006; Deutsche Fassung EN ISO 845:2009), und einer Druckfestigkeit bei 10% Stauchung (parallel) von 0,20-0,50 mPa (ISO 844:2014; Deutsche Fassung EN ISO 844:2014), erhältlich durch die Reaktion der Komponenten aus der Gruppe bestehend aus
A1) 90-100 Gew.-% eines Polyetherpolyoles mit einer zahlenmittleren Funktionalität von 2-6 und einer OH-Zahl von 50-900 mg KOH/g (DIN 53240-2, Stand November 2007), basierend auf Ethylen- und/oder Propylenoxid und 0-10 Gew.-% eines oder mehrerer Polyesterpolyole,
A2) gegebenenfalls Kettenverlängerungs- und/oder Vernetzungsmitteln,
B) mindestens einer Isocyanatkomponente,
   in Gegenwart von
C) mindestens einem Phospholenoxid ausgewählt aus der Gruppe bestehend aus 1-Methyl-phospholen-1-oxid, 1-Ethyl-phospholen-1-oxid und 1-Phenyl-phospholen-1-oxid,
D) Katalysatoren,
E) 0,1 - 2,0 Gew.-% Zellöffnern, bezogen auf die Isocyanat-reaktive Komponente (A1) und (A2),
F) 0,1 - 5 Gew.-% oberflächenaktive Substanzen und Stabilisatoren, bezogen auf das Gesamtgewicht der Komponenten (A1) und (A2),
G) gegebenenfalls Hilfs-und/oder Zusatzmitteln,
wobei das Verhältnis der NCO-Gruppen der Komponente (B) zu den OH-Gruppen der Komponente (A1) und gegebenenfalls (A2) 0,9:1 bis 1,2:1 beträgt.

Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der Polyol-Komponente (A1) ist somit beispielsweise die zahlenmittlere Funktionalität der Mischung aus den in der Komponente (A1) enthaltenden Polyolen in Bezug auf alle enthaltenen Isocyanat-reaktiven Funktionen gemeint.

Mit "Molgewicht" oder "Molmasse" bzw. "Mₙ" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Geeignete Polyesterpolyole sind unter anderem Polykondensate aus Di- sowie weiterhin Tri- und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3- und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Weiterhin können in der Isocyanat-reaktiven Komponente (A) niedermolekulare Isocyanat-reaktive Verbindungen (A2) enthalten sein, insbesondere können di- oder trifunktionelle Alkohole, besonders bevorzugt Diole und/oder Triole mit Molmassen Mₙ kleiner als 400 g/mol, vorzugsweise von 60 bis 300 g/mol, zum Einsatz kommen, z.B. Diethylenglykol, Ethylenglykol, Glycerin. Sofern zur Herstellung der Polyurethanhartschaumstoffe solche niedermolekularen Isocyanat-reaktiven Verbindungen Anwendung finden, z.B. in der Funktion als Kettenverlängerungsmittel und/oder Vernetzungsmittel, und diese nicht auch unter die Definition der Komponente (A1) fallen, kommen diese zweckmäßigerweise in einer Menge von bis zu 5 Gew.-%, bezogen auf das Gesamtgewicht der Komponente (A1) und (A2) zum Einsatz.

Zellöffner (E) sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern. Bevorzugt sind Zellöffner auf Basis Polybutadien. Die zellöffnenden Komponenten werden in Mengen von 0,1 - 2,0 Gew.-%, bezogen auf die Isocyanat-reaktive Komponente (A1) und (A2), eingesetzt. Besonders bevorzugt ist der Einsatz 0,25 - 0,75 Gew.-%, jeweils bezogen auf das Gesamtgewicht der Komponente (A1) und (A2).

Einige der bekannten zellöffnenden Verbindungen, z.B. die Silikone, können auch gleichzeitig Aufgaben als (F) oberflächenaktive Substanzen und Stabilisatoren, insbesondere Schaumstabilisatoren übernehmen. In diesem Fall können von diesen Komponenten auch höhere als die oben für die zellöffnenden Verbindungen genannten, bevorzugten Mengen eingesetzt werden.

Es werden häufig Polyether-Polydimethylsiloxan-Copolymere als Schaumstabilisatoren verwendet, vorzugsweise ein Polyethylenoxid-Polyether mit Oligodimethylsiloxan-Endgruppen, wobei die Zahl der Dimethylsiloxan-Einheiten vorzugsweise ≤ 5 ist.

Als Stabilisatoren können auch gesättigte und ungesättigte Kohlenwasserstoffe wie Paraffine, Polybutadiene, Fettalkohole sowie Ester, z.B. Ester von Carbonsäuren, eingesetzt werden. Weiterhin können als Stabilisatoren oberflächenaktive Substanzen eingesetzt werden, beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende oberflächenaktive Substanzen und/oder Bis(2-ethyl-1-hexyl)sulfosuccinat. Fluorierte oberflächenaktive Substanzen können perfluoriert oder teilfluoriert sein. Beispiele hierfür sind teilfluorierte ethoxylierte Alkanole oder Carbonsäuren.

Die Komponenten (A1) und (A2) enthalten insgesamt 0,1 - 5 Gew.-% oberflächenaktive Substanzen und Stabilisatoren, insbesondere Schaumstabilisatoren, bevorzugt maximal 3 Gew.-%, besonders bevorzugt weniger als 2 Gew.-% und insbesondere bevorzugt maximal 1,6 Gew.-% an oberflächenaktiven Substanzen, bezogen auf das Gesamtgewicht der Komponenten (A1) und (A2).

Der Polyurethanschaum enthält optional Hilfs- und Zusatzstoffe (G), die in dem erfindungsgemäßen Schaum eingesetzt werden können, sind die aus dem Stand der Technik und dem Fachmann bekannten und üblichen Hilfs- und Zusatzstoffe. Genannt seien beispielsweise Füllstoffe, Farbstoffe, Pigmente, Flammschutzmittel, Antistatika, Hydrolyseschutzmittel und/oder fungistatisch und bakteriostatisch wirkende Substanzen.

Für die Herstellung des PUR/PIR-Hartschaums werden Katalysatoren (D) eingesetzt. Als Katalysatoren (D) werden üblicherweise Verbindungen verwendet, welche die Reaktion der Hydroxylgruppen bzw. isocyanatreaktiven Gruppen enthaltenden Verbindungen der Komponenten mit den Isocyanatgruppen der Komponente (B) beschleunigen.

Die Katalysatoren (D) enthalten mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind Bis-dimethylaminopropylharnstoff, Bis(N,N-Dimethylamino-ethoxyethyl)carbamat, Di-methylamino-propylharnstoff, N,N,N-Trimethyl-N-hydroxyethyl-bis(aminopropylether), N,N,N-Trimethyl-N-hydroxyethylbis(aminoethylether), Diethylethanol-amin, Bis(N,N-dimethyl-3-aminopropyl)amin, Dimethylaminopropylamin, 3-Di¬methylamino-propyl-N,N-dimethylpropan-1,3-diamin, Dimethyl-2-(2-amino¬ethoxyethanol) und (1,3-Bis-(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(amino-ethylether), 3-Dimethylaminoisopropyl-diisopropanolamin oder Mischungen davon.

Daneben können eine oder mehrere weitere Katalysatorverbindung, insbesondere die für die PUR/PIR - Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexa¬hydro¬triazin, Tetramethylammoniumhydroxid, Natriumacetat, Natriumoctoat, Kaliumacetat, Kaliumoctoat, Natriumhydroxid.

Die Katalysatoren (D) werden im Allgemeinen in einer Menge von 0,001 bis 5 Gew.-%, insbesondere von 0,05 bis 2,5 Gew.-% bezogen auf das Gewicht der Komponente (A1), eingesetzt. Besonders bevorzugt enthalten die Katalysatoren (D) sowohl einbaubare Katalysatoren und nicht einbaubare Katalysatoren. Insbesondere ist es bevorzugt, dass einbaubare Aminverbindungen und katalytisch aktive Salze in Kombination eingesetzt werden.

In der Herstellung des PUR/PIR-Hartschaums wird eine Treibmittelkomponente (C) verwendet.

Als Treibmittel (C) wird Phospholenoxid verwendet, welches zu der Gruppe der chemischen Treibmittel gehört. Phospholenoxide katalysieren die Reaktion von Isocyanaten zu Carbodiimiden, wobei das dabei entstehende CO₂ als Treibmittel für die PUR Reaktion fungiert. Beispiele von Phospholenoxiden sind: 1-Methyl-phospholen-1-oxid, 1-Ethyl-phospholen-1-oxid, 1-Phenyl-3-methyl-phospholen-1-oxid, 1-Benzyl-3-methyl-phospholen-1-oxid, 1-Ethyl-3-methyl-phospholen-1-oxid oder Mischungen aus diesen. Bevorzugt wird Phospholenoxid in einer Menge von 0,5 - 6 Gew.-%, besonders bevorzugt von 2 bis 5 Gew.-%, bezogen auf die Gesamtmenge an Verbindungen mit gegenüber Isocyanatgruppen reaktiven Wasserstoffatomen in dem schaumbildenden Reaktionsgemisch, eingesetzt.Phospholenoxid wird als einziges Treibmittel eingesetzt. Die Treibmittelkomponente (C) enthält keine weiteren physikalischen Treibmittel.

Phospholenoxid wird in einer bevorzugten Ausführungsform mit den weiteren Komponenten (A1, A2, D, E, F) vor der Umsetzung mit der Isocyanatkomponente (B) gemischt. Hierbei wird bevorzugt eine Konzentration von 0,5 - 6 Gewichtsprozent Phospholenoxid, bezogen auf (A1) und gegebenenfalls (A2) eingestellt. Die Treibmittelkomponente (C) wird insgesamt in einer solchen Menge verwendet, wie sie zur Erzielung einer dimensionsstabilen Schaummatrix und der gewünschten Rohdichte nötig ist.

Als Isocyanatkomponente (B) werden bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO - Funktionalität f > 2 aufweisen und folgende Strukturformel aufweisen: C₁₅H₁₀N₂O₂ [C₈H₅NO]ₙ, wobei n = ganze Zahl > 0, bevorzugt n = 1, 2, 3 und 4, ist. Höherkernige Homologe C₁₅H₁₀N₂O₂ [C₈H₅NO]ₘ, m = ganze Zahl ≥ 4) können ebenfalls im Gemisch aus organischen Polyisocyanaten B) enthalten sein.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente (B) eingesetzt werden. Die Präpolymere sind herstellbar durch Umsetzung eines oder mehrerer Polyisocyanate mit einem oder mehreren Polyolen, ausgewählt aus der Gruppe bestehend aus Polyetherpolyolen, Polyesterpolyolen, Polyetheresterpolyolen, Polycarbonatpolyolen und Polyether-Polycarbonatpolyolen. Die Polyole weisen eine Hydroxylzahl von 100-900 mg KOH/g auf.

Der NCO-Gehalt beträgt bevorzugt von ≥ 29,0 Gew.-% bis ≤ 32,0 Gew.%, und weist bevorzugt eine Viskosität bei 25 °C von ≥ 80 mPas bis ≤ 2000 mPas, besonders bevorzugt von ≥ 100 mPas bis ≤ 800 mPas auf (dynamische Viskosität bestimmt nach DIN 53019, bei 25°C).

Zur Herstellung der Polyurethan-Hartschaumstoffe werden in der Regel die Komponenten (A) und (B) in solchen Mengen zur Umsetzung gebracht, dass das Verhältnis der NCO-Gruppen der Komponente (B) zu den OH-Gruppen der Komponente (A) 0,9:1 bis 1,2:1 beträgt. In diesem Bereich werden bevorzugt Urethangruppen gebildet.

Die erfindungsgemäßen PUR/PIR Schaumstoffe werden nach bekannten Verfahren hergestellt.

Aus den erfindungsgemäßen PUR/PIR-Schäumen lassen sich in bevorzugter Weise geschäumte Formkörper und Verbundsysteme enthaltend diese Formkörper herstellen. Die Verbundsysteme sind oft sowohl an der Ober- als auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR/PIR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR/PIR-Schäumen auf diesen Gebieten ist dem Fachmann grundsätzlich bekannt und wurde schon vielfach beschrieben. Die erfindungsgemäßen PUR/PIR-Schäume eignen sich außerordentlich gut für diese Zwecke, da sie sich aufgrund ihrer Feinzelligkeit durch geringe Wärmeleitzahlen auszeichnen, die durch das Anlegen von Vakuum noch weiter gesteigert werden können.

Die Erfindung betrifft zudem die Verwendung der erfindungsgemäßen PUR/PIR-Hartschäume bei der Herstellung von Kühlschränken, Gefrierschränken oder Kühl-Gefrierkombinationen, wobei die bei der Herstellung bereitgestellte Form insbesondere ein Gehäuseteil eines Kühlschranks, eines Gefrierschranks oder einer Kühl-Gefrierkombination ist.

Die Erfindung soll anhand der nachfolgenden Beispiele und Vergleichsbeispiele näher erläutert werden.

### Beispiele

### Verwendete Normen bzw. Messgeräte:

Bestimmung der Rohdichte: Schaumstoffe aus Kautschuk und Kunststoffen - Bestimmung der Rohdichte (ISO 845:2006); Deutsche Fassung EN ISO 845:2009

Bestimmung der Offenzelligkeit: - Bestimmung des Volumenanteils offener und geschlossener Zellen (ISO 4590:2002) Deutsche Fassung EN ISO 4590:2003

Bestimmung der Druckfestigkeit: Harte Schaumstoffe -Bestimmung der Druckeigenschaften (ISO 844:2014); Deutsche Fassung EN ISO 844:2014

Bestimmung der OH-Zahl: Die Bestimmung der Hydroxylzahl - Teil 2: Verfahren mit Katalysator gemäß DIN 53240-2, Stand November 2007

Bestimmung der Zellgröße: Lichtmikroskopische Auswertung via Lichtmikroskop VHX 5000; Der zu vermessende Probekörper wird an 3 unterschiedlichen Stellen jeweils über einen kreisförmigen Bereich mit einem Durchmesser von 5 mm untersucht. Hierbei wird die Auflösung so gewählt, dass der ausgewählte Bereich rund 100 Zellen erfasst. Danach werden 100 Zellen vermessen, der kleinste und der "D90" Zelldurchmesser ("D90": bei dem 90% der Zellen kleiner sind als dieser Wert) sowie der durchschnittliche arithmetische Zelldurchmesser berechnet.

Für die Herstellung der Schäume gemäß Beispielen 1-2 (erfindungsgemäß) sowie den Beispielen 1^{∗}-2^{∗} (Vergleich) kamen folgende Stoffe zum Einsatz:
- Polyol 1:: Polyetherpolyol auf Basis Trimethylolpropan und Propylenoxid mit einer Hydroxylzahl von 800 mg KOH/g, einer Funktionalität von 3 und einer Viskosität von 6100 mPas bei 25 °C
- Polyol 2:: Polyetherpolyol auf Basis Trimethylolpropan und Ethylenoxid mit einer Hydroxylzahl von 550 mg KOH/g, einer Funktionalität von 3 und einer Viskosität von 505 mPas bei 25 °C
- Polyol 3:: Polyetherpolyol auf Basis 1,2-Propandiol und Propylenoxid mit einer Hydroxylzahl von 56 mg KOH/g, einer Funktionalität von 2 und einer Viskosität von 310 mPas bei 25 °C
- Polyol 4:: Polyetherpolyol auf Basis 1,2 Propandiol und Propylenoxid mit einer Hydroxylzahl von 112 mg KOH/g, einer Funktionalität von 2 und einer Viskosität von 140 mPas bei 25 °C
- Polyol 5:: Polyetherpolyol auf Basis Glycerin und Propylenoxid mit einer Hydroxylzahl von 231 mg KOH/g, einer Funktionalität von 3 und einer Viskosität von 350 mPas bei 20 °C
- B 8443:: Schaumstabilisator (Evonik) auf Basis von Polyether-Polydimethylsiloxan-Copolymeren
- Ortegol 500:: Zellöffner (Evonik) auf Basis von Polybutadien
- Kaliumacetat/DEG:: Katalysator, Kaliumacetat 25 % ig in Diethylenglykol (Covestro)
- Dabco NE1070:: Katalysator, 3-(Dimethylamino)propylharnstoff ca. 60%-ig in Diethylenglykol (Air Products)
- 1-Methyl-phospholen-1-oxid (Lubio^{®} Polykat 10):: Katalysator für die Carbodiimid Herstellung, chemisches Treibmittel (Schäfer Additivsysteme GmbH)
- Isocyanat 1:: Gemisch aus monomerem und polymerem MDI mit einer Viskosität von ca. 290 m Pa^{∗}s bei 20 °C (Desmodur 44V20L, Covestro)

### Herstellung der Polyurethanformschäume

Zur Herstellung von Polyurethanformschäumen wurden je nach gewünschter Rohdichte entsprechende Mengen an Polyolformulierung (siehe Tabelle 1) eingewogen und mittels Rührer homogenisiert. Die so erhaltene Isocyanat-reaktive Zusammensetzung wurde mit der entsprechenden Menge Isocyanat (siehe Tabelle 1) via Pendraulikrührer für 10 Sekunden bei 23 °C vermischt und die Mischung in eine nach oben hin geöffnete Form mit den Maßen 22,5x22,5x6 cm (3,04 L Volumen) ausgegossen. Sofort im Anschluss wurde die Form mit einer Buchpresse für 10 Minuten verschlossen. Die genauen Rezepturen inklusive der Ergebnisse entsprechender physikalischer Untersuchungen und der Charakterisierung mit den oben angeführten Messmethoden sind in Tabelle 1 zusammengefasst.

**Tabelle 1**

| **Beispiel** | | **1** | **2** | **1^{∗}** | **2^{∗}** |
|---|---|---|---|---|---|
| **Formulierung** | | | | | |
| Polyol 1 | [Gew.-%] | 13,00 | 13,00 | 13,00 | 13,00 |
| Polyol 2 | " | 32,50 | 32,50 | 32,50 | 32,50 |
| Polyol 3 | " | 13,50 | 13,50 | 13,50 | 13,50 |
| Polyol 4 | " | 9,50 | 9,50 | 9,50 | 9,50 |
| Polyol 5 | " | 27,00 | 27,00 | 27,00 | 27,00 |
| B 8443 | " | 1,50 | 1,50 | 1,50 | 1,50 |
| Ortegol 500 | " | 0,50 | 0,50 | 0,50 | 0,50 |
| Dabco NE1070 | " | 1,00 | 1,00 | 1,00 | 1,00 |
| 1 -Methyl-phospholen- 1 -oxid | " | **3,00** | **3,50** | | |
| n-Pentan | " | | | **10,00** | **6,92** |
| Pol yolfunktionalität | | 2,916 | 2,916 | 2,916 | 2,916 |
| | | | | | |
| Isocyanat1 | | 91,35 | 91,35 | 91,35 | 91,35 |
| Index | NCO/ OH | 100 | 100 | 100 | 100 |
| | | | | | |
| Rohdichte | [kg/m³] | 79 | 84 | 65 | 85 |
| Druckfestigkeit bei 10 % Stauchung (parallel) | [MPa] | 0,33 | 0,27 | 0,29 | 0,47 |
| Offenzelligkeit | [%] | 94 | 91 | 88 | 78 |
| Zellgröße Durchschnitt | [µm] | 52 | 47 | 73 | 75 |
| Zellgröße kleinste Zelle | [µm] | 19 | 15 | 28 | 17 |
| Zellgröße D90 | [µm] | 76 | 69 | 106 | 118 |

| | | | | | |
|---|---|---|---|---|---|
| ^{∗}Vergleich | | | | | |

Die Beispiele 1 und 2 zeigen, dass mit der angeführten Rezeptur sehr feinzellige Hartschäume mit einem hohen Anteil an offenen Zellen hergestellt werden können. Die durchschnittlichen Zellgrößen der erfindungsgemäßen Beispiele sind deutlich kleiner als bei den Vergleichsbeispielen, bei denen kein Phospholenoxid verwendet wurde. Bei gleicher Rohdichte (Beispiel 2 + Beispiel 2^{∗}) von 85 kg/m³, kann durch den Einsatz von Phospholenoxid die durchschnittliche arithmetische Zellgröße von 75 µm auf 47 µm verringert werden. Dies ist im Hinblick auf die Verwendung der Schäume als Kernmaterial für Vakuumisolationsanwendungen ein deutlicher Vorteil, da somit ein geringerer Lambda-Wert bei gleichem Druck erzielt werden kann.

Weiter demonstrieren die Bespiele 1 und 2, dass bei einem Formschaum durch Phospholenoxid als chemisches Treibmittel, eine hohe Offenzelligkeit erreicht werden kann. Wird Beispiel 2 und 2^{∗} verglichen, so zeigt sich dass die Offenzelligkeit um 13% gesteigert werden konnte. Eine hohe Offenzelligkeit ist vor allem für die spätere Anwendung des Hartschaumes als Füllmaterial für Vakuumisolationspaneele wichtig, denn eine vollständige Evakuierbarkeit muss garantiert sein.

## Patentansprüche

1. Offenzelliger Polyurethanschaum mit einer Offenzelligkeit > 90% (ISO 4590:2002; Deutsche Fassung EN ISO 4590:2003), einer durchschnittlichen arithmetischen Zellgröße zwischen 20-90 µm, wobei die durchschnittliche arithmetische Zellgröße durch lichtmikroskopische Auswertung via Lichtmikroskop VHX 5000 bestimmt wird und der zu vermessende Probekörper an 3 unterschiedlichen Stellen jeweils über einen kreisförmigen Bereich mit einem Durchmesser von 5 mm untersucht wird, die Auflösung so gewählt wird, dass der ausgewählte Bereich rund 100 Zellen erfasst, und 100 Zellen vermessen werden, der kleinste und der "D90" Zelldurchmesser ("D90": bei dem 90% der Zellen kleiner sind als dieser Wert) sowie der durchschnittliche arithmetische Zelldurchmesser berechnet werden, bei einer Rohdichte zwischen 35 -120 kg/m³ (ISO 845:2006; Deutsche Fassung EN ISO 845:2009) und einer Druckfestigkeit bei 10% Stauchung (parallel) von 0,20-0,50 mPa (ISO 844:2014; Deutsche Fassung EN ISO 844:2014), erhältlich durch die Reaktion der Komponenten aus der Gruppe bestehend aus
A1) 90-100 Gew.-% mindestens eines Polyetherpolyoles mit einer zahlenmittleren Funktionalität von 2-6 und einer OH-Zahl von 50-900 mg KOH/g (DIN 53240-2, Stand November 2007), basierend auf Ethylen- und/oder Propylenoxid und 0-10 Gew.-% eines oder mehrerer Polyesterpolyole,
A2) gegebenenfalls Kettenverlängerungs- und/oder Vernetzungsmitteln,
B) mindestens einer Isocyanatkomponente,
C) mindestens einem Phospholenoxid ausgewählt aus der Gruppe bestehend aus 1-Methyl-phospholen-1-oxid, 1-Ethyl-phospholen-1-oxid, 1-Phenyl-phospholen-1-oxid
in Gegenwart von
D) Katalysatoren,
E) 0,1 - 2,0 Gew.-% Zellöffnern, bezogen auf die Isocyanat-reaktive Komponente (A1)+(A2),
F) 0,1 - 5 Gew.-% oberflächenaktive Substanzen und Stabilisatoren, bezogen auf das Gesamtgewicht der Komponenten (A1) und (A2),
G) gegebenenfalls Hilfs-und/oder Zusatzmitteln,
wobei das Verhältnis der NCO-Gruppen der Komponente (B) zu den OH-Gruppen der Komponente (A1) und (A2) 0,9:1 bis 1,2:1 beträgt.

2. Offenzelliger Polyurethanschaum gemäß Anspruch 1 mit einer durchschnittlichen arithmetischen Zellgröße zwischen 30-80 µm, wobei die durchschnittliche arithmetische Zellgröße durch lichtmikroskopische Auswertung via Lichtmikroskop VHX 5000 bestimmt wird und der zu vermessende Probekörper an 3 unterschiedlichen Stellen jeweils über einen kreisförmigen Bereich mit einem Durchmesser von 5 mm untersucht wird, die Auflösung so gewählt wird, dass der ausgewählte Bereich rund 100 Zellen erfasst, und 100 Zellen vermessen werden, der kleinste und der "D90" Zelldurchmesser ("D90": bei dem 90% der Zellen kleiner sind als dieser Wert) sowie der durchschnittliche arithmetische Zelldurchmesser berechnet werden , bei einer Rohdichte zwischen 40-100 kg/m³ (ISO 845:2006; Deutsche Fassung EN ISO 845:2009).

3. Offenzelliger Polyurethanschaum gemäß Anspruch 1 mit einer durchschnittlichen arithmetischen Zellgröße zwischen 40-70 µm, wobei die durchschnittliche arithmetische Zellgröße durch lichtmikroskopische Auswertung via Lichtmikroskop VHX 5000 bestimmt wird und der zu vermessende Probekörper an 3 unterschiedlichen Stellen jeweils über einen kreisförmigen Bereich mit einem Durchmesser von 5 mm untersucht wird, die Auflösung so gewählt wird, dass der ausgewählte Bereich rund 100 Zellen erfasst, und 100 Zellen vermessen werden, der kleinste und der "D90" Zelldurchmesser ("D90": bei dem 90% der Zellen kleiner sind als dieser Wert) sowie der durchschnittliche arithmetische Zelldurchmesser berechnet werden, bei einer Rohdichte zwischen 40 -70 kg/m³ (ISO 845:2006; Deutsche Fassung EN ISO 845:2009).

4. Verwendung des offenzelligen Polyurethanschaumes gemäß Anspruch 1 zur Herstellung von Vakuumisolationspaneelen.

## Claims

1. Open-celled polyurethane foam having an open-cell content > 90% (ISO 4590:2002; German version EN ISO 4590:2003), an average arithmetic cell size between 20-90 µm, wherein the average arithmetic cell size is determined by optical microscopy evaluation using a VHX 5000 optical microscope and the test specimen to be analyzed is examined at 3 different points in each case over a circular region having a diameter of 5 mm, the resolution is chosen such that the selected region captures around 100 cells and 100 cells are analyzed, the smallest cell diameter and the "D90" cell diameter ("D90": where 90% of cells are smaller than this value) and the average arithmetic cell diameter are calculated, at an apparent density between 35-120 kg/m³ (ISO 845:2006; German version EN ISO 845:2009) and a compressive strength at 10% compression (parallel) of 0.20-0.50 mPa (ISO 844:2014; German version EN ISO 844:2014), obtainable by the reaction of the components from the group consisting of
A1) 90-100% by weight of at least one polyether polyol having a number-average functionality of 2-6 and an OH number of 50-900 mg KOH/g (DIN 53240-2, as at November 2007) based on ethylene and/or propylene oxide and 0-10% by weight of one or more polyester polyols,
A2) optionally chain extenders and/or crosslinkers,
B) at least one isocyanate component,
C) at least one phospholene oxide selected from the group consisting of 1-methylphospholene-1-oxide, 1-ethylphospholene-1-oxide and 1-phenylphospholene-1-oxide in the presence of
D) catalysts,
E) 0.1-2.0% by weight of cell openers, based on the isocyanate-reactive component (A1)+(A2),
F) 0.1-5% by weight of surface-active substances and stabilizers based on the total weight of the components (A1) and (A2),
G) optionally assistants and/or additives,
wherein the ratio of the NCO groups of the component (B) to the OH groups of the component (A1) and (A2) is 0.9:1 to 1.2:1.

2. Open-celled polyurethane foam according to Claim 1 having an average arithmetic cell size between 30-80 µm, wherein the average arithmetic cell size is determined by optical microscopy evaluation using a VHX 5000 optical microscope and the test specimen to be analyzed is examined at 3 different points in each case over a circular region having a diameter of 5 mm, the resolution is chosen such that the selected region captures around 100 cells and 100 cells are analyzed, the smallest cell diameter and the "D90" cell diameter ("D90": where 90% of cells are smaller than this value) and the average arithmetic cell diameter are calculated, at an apparent density between 40-100 kg/m³ (ISO 845:2006; German version EN ISO 845:2009).

3. Open-celled polyurethane foam according to Claim 1 having an average arithmetic cell size between 40-70 µm, wherein the average arithmetic cell size is determined by optical microscopy evaluation using a VHX 5000 optical microscope and the test specimen to be analyzed is examined at 3 different points in each case over a circular region having a diameter of 5 mm, the resolution is chosen such that the selected region captures around 100 cells and 100 cells are analyzed, the smallest cell diameter and the "D90" cell diameter ("D90": where 90% of cells are smaller than this value) and the average arithmetic cell diameter are calculated, at an apparent density between 40-70 kg/m³ (ISO 845:2006; German version EN ISO 845:2009).

4. Use of the open-celled polyurethane foam according to Claim 1 for production of vacuum insulation panels.

## Revendications

1. Mousse de polyuréthane à cellules ouvertes ayant un pourcentage volumique de cellules ouvertes > 90 % (ISO 4590:2002 ; version allemande EN ISO 4590:2003), une taille arithmétique moyenne des cellules entre 20 et 90 µm, la taille arithmétique moyenne des cellules étant déterminée par évaluation au microscope optique à l'aide du microscope optique VHX 5000 et l'éprouvette faisant l'objet de la mesure étant étudiée en 3 points différents, chacun sur une zone circulaire ayant un diamètre de 5 mm, la résolution étant choisie de telle sorte que la zone choisie englobe environ 100 cellules, et 100 cellules faisant l'objet d'une mesure, le calcul portant sur le diamètre de cellule le plus petit et le « D90 » (« D90 » : diamètre pour lequel 90 % des cellules sont plus petites que cette valeur), ainsi que sur le diamètre arithmétique moyen des cellules, pour une masse volumique apparente entre 35 et 120 kg/m³ (ISO 845:2006 ; version allemande EN ISO 845:2009) et une résistance à la compression pour une déformation relative (parallèle) de 10 % de 0,20 à 0,50 mPa (ISO 844:2014 ; version allemande EN ISO 844:2014), pouvant être obtenue par la réaction des composants du groupe consistant en
A1) 90 à 100 % en poids d'au moins un polyétherpolyol ayant une fonctionnalité moyenne en nombre de 2 à 6 et un indice d'OH de 50 à 900 mg KOH/g (DIN 53240-2, version novembre 2007), à base d'oxyde d'éthylène et/ou de propylène et 0 à 10 % en poids d'un ou plusieurs polyesterpolyols,
A2) éventuellement des agents prolongateurs de chaîne et/ou de réticulation,
B) au moins un composant isocyanate,
C) au moins un oxyde de phospholène choisi dans le groupe consistant en le 1-oxyde de 1-méthyl-phospholène, le 1-oxyde de 1-éthyl-phospholène, le 1-oxyde de 1-phényl-phospholène
en présence
D) de catalyseurs,
E) de 0,1 à 2,0 % en poids d'agents d'ouverture des cellules, par rapport au composant réactif vis-à-vis des isocyanates (A1) + (A2),
F) de 0,1 à 5 % en poids de substances tensioactives et de stabilisants, par rapport au poids total des composants (A1) et (A2),
G) éventuellement d'auxiliaires et/ou d'additifs,
le rapport des groupes NCO du composant (B) aux groupes OH des composants (A1) et (A2) étant de 0,9:1 à 1,2:1.

2. Mousse de polyuréthane à cellules ouvertes selon la revendication 1, ayant une taille arithmétique moyenne des cellules entre 30 et 80 µm, la taille arithmétique moyenne des cellules étant déterminée par évaluation au microscope optique à l'aide du microscope optique VHX 5000 et l'éprouvette faisant l'objet de la mesure étant étudiée en 3 points différents, chacun sur une zone circulaire ayant un diamètre de 5 mm, la résolution étant choisie de telle sorte que la zone choisie englobe environ 100 cellules, et 100 cellules faisant l'objet d'une mesure, le calcul portant sur le diamètre de cellule le plus petit et le « D90 » (« D90 » : diamètre pour lequel 90 % des cellules sont plus petites que cette valeur), ainsi que sur le diamètre arithmétique moyen des cellules, pour une masse volumique apparente entre 40 et 100 kg/m³ (ISO 845:2006 ; version allemande EN ISO 845:2009).

3. Mousse de polyuréthane à cellules ouvertes selon la revendication 1, ayant une taille arithmétique moyenne des cellules entre 40 et 70 µm, la taille arithmétique moyenne des cellules étant déterminée par évaluation au microscope optique à l'aide du microscope optique VHX 5000 et l'éprouvette faisant l'objet de la mesure étant étudiée en 3 points différents, chacun sur une zone circulaire ayant un diamètre de 5 mm, la résolution étant choisie de telle sorte que la zone choisie englobe environ 100 cellules, et 100 cellules faisant l'objet d'une mesure, le calcul portant sur le diamètre de cellule le plus petit et le « D90 » (« D90 » : diamètre pour lequel 90 % des cellules sont plus petites que cette valeur), ainsi que sur le diamètre arithmétique moyen des cellules, pour une masse volumique apparente entre 40 et 70 kg/m³ (ISO 845:2006 ; version allemande EN ISO 845:2009).

4. Utilisation de la mousse de polyuréthane à cellules ouvertes selon la revendication 1 pour fabriquer des panneaux d'isolation sous vide.
